(19) Europäisches Patentamt
European Patent Office
Office européen des brevets

(11) **EP 4 592 415 A1**

(12) **EUROPEAN PATENT APPLICATION**
published in accordance with Art. 153(4) EPC

(43) Date of publication:
**30.07.2025 Bulletin 2025/31**

(21) Application number: 23903163.6

(22) Date of filing: **10.11.2023**

(51) International Patent Classification (IPC):
$C22C\ 38/00^{(2006.01)}$    $C22C\ 38/04^{(2006.01)}$
$C22C\ 38/58^{(2006.01)}$    $B23K\ 11/11^{(2006.01)}$
$B23K\ 11/16^{(2006.01)}$    $B23K\ 11/24^{(2006.01)}$

(52) Cooperative Patent Classification (CPC):
**B23K 11/11; B23K 11/16; B23K 11/24; C22C 38/00;
C22C 38/04; C22C 38/58**

(86) International application number:
**PCT/JP2023/040490**

(87) International publication number:
**WO 2024/127865 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022 JP 2022199902**

(71) Applicant: **JFE Steel Corporation
Tokyo 100-0011 (JP)**

(72) Inventors:
• **ENDO, Reiko
Tokyo 100-0011 (JP)**
• **TAKASHIMA, Katsutoshi
Tokyo 100-0011 (JP)**

(74) Representative: **Haseltine Lake Kempner LLP
Bürkleinstrasse 10
80538 München (DE)**

(54) **METHOD FOR MANUFACTURING RESISTANCE SPOT WELDING JOINT**

(57)    An object is to provide a method for producing a resistance spot welded joint. The present invention involves a preparatory step of overlapping two or more steel sheets including at least one high-strength steel sheet to form a sheet assembly; a welding step of resistance spot welding the sheet assembly; and a heat treatment step of heat-treating a resistance spot weld. The welding step includes a main heating step of forming the resistance spot weld; and a post-heating step including a cooling process of cooling the resistance spot weld for a cooling time $t_{c1}$ of 20 to 800 ms, a heating process of subsequently applying a predetermined current $I_2$ to the resistance spot weld for a current passing time $t_2$ of 10 to 200 ms, and a holding process of subsequently applying a predetermined current $I_3$ to the resistance spot weld for a current passing time $t_3$ of more than 0 ms and less than 600 ms. The heat treatment step includes heat-treating the resistance spot weld at a temperature $T$ of 70 to 300°C for a time $t_4$ of 5 to 30 min.

FIG. 2

EP 4 592 415 A1

**Description**

Technical Field

The present invention relates to a method for producing resistance spot welded joints.

Background Art

In recent years, various types of high-strength steel sheets (also called high-tensile steel sheets) have been increasingly used for automobile bodies in order to reduce weight and thereby to improve fuel efficiency, and also in order to ensure crash safety. On automobile assembly lines, resistance spot welding is mainly used to join components.

The joint strength of resistance spot welds produced by resistance spot welding is evaluated based on tensile shear strength (TSS) that is a tensile strength in a shear direction, and cross tension strength (CTS) that is a tensile strength in a peeling direction.

The TSS of a resistance spot weld tends to increase with the tensile strength of the base material, but the CTS is sometimes lowered when the tensile strength of the base material is 980 N/mm$^2$ or more (980 MPa or more). When the CTS is low, the fracture mode of a resistance spot weld (hereinafter, also written as the "weld") shifts from plug fracture in which the weld is ductile fractured at the base material around the weld or at the heat-affected zone (HAZ), to interfacial fracture or partial plug fracture in which the weld is brittle fractured within the nugget. One of the main causes of low CTS is believed to be brittle fracture stemming from hardening of a nugget edge after quenching. Another reason is considered to be the fact that steel sheets increased in strength exhibit high sensitivity to hydrogen embrittlement.

Furthermore, in resistance spot welding, hydrogen stemming from, for example, anti-rust oils on the steel sheet surface and coating layers on the steel sheet surface is absorbed into the welds to facilitate the occurrence of delayed fracture.

Techniques for solving such problems are disclosed in, for example, Patent Literature 1 and Patent Literature 2. Patent Literature 1 discloses that steel sheets having a tensile strength of 440 MPa or more are resistance spot welded, and the weld is subjected to a heat treatment that satisfies the following expression (A):

$$300 \leq T \cdot (\log_{10}(t) + 1) \leq 1000 \quad \cdots (A)$$

Patent Literature 2 discloses that high-strength steel sheets with an equivalent carbon content (Ceq) in the range of 0.22 to 0.55 mass% are welded to form a nugget, and subsequently the weld is post-heated at a high current to reduce segregation, thereby improving, for example, the cross tension strength, the fatigue strength, and the delayed fracture resistance of the welded joint.

Citation List

Patent Literature

PTL 1: Japanese Unexamined Patent Application Publication No. 2010-59451
PTL 2: Japanese Patent No. 6194765

Summary of Invention

Technical Problem

However, the technique of Patent Literature 1 is not realistic because the expression that specifies the heat treatment is so broad in range and even includes a case where the heat treatment lasts for several decades.

According to the technique of Patent Literature 1, carbon, phosphorus, and sulfur are specified as steel sheet components for enhancing the toughness of nugget edges, but the contents of the segregation elements are low. Furthermore, the C contents and the P contents described in Table 4 of Examples of Patent Literature 1 are broad and not specific. It is thus unclear whether the L-shaped strength (that is, the tensile strength of an L-shaped joint) is enhanced by the effects of the heat treatment, or whether the enhancements in L-shaped strength are ascribed to the components in the steel sheets.

The high-strength steel sheets used in Inventive Examples described later are high-C steel sheets. When the technique of Patent Literature 2 is applied to the present invention, it is difficult to obtain high cross tension strength by post-heating alone disclosed in Patent Literature 2. As will be described later, the present invention promotes the tempering of nugget edges by performing heat treatment after the welding. That is, the technical ideas of these two are different.

As already mentioned, the CTS is lowered when steel sheets with a tensile strength of 980 MPa or more, in particular, high-strength steel sheets with a tensile strength of 980 MPa or more and a C content of 0.10 to 0.40 mass% are spot welded by single energization alone. This problem needs to be solved. Furthermore, such welding problematically results in delayed fracture.

The present invention has been made in view of the problems discussed above. It is therefore an object of the present invention to provide a method for producing a resistance spot welded joint by joining a plurality of steel sheets including at least one high-strength steel sheet in a way that joint strength properties (specifically, CTS and delayed fracture resistance) can be enhanced.

Solution to Problem

In order to solve the problems described above, the present inventors have conducted extensive studies using sheet assemblies including at least one high-strength steel sheet and have explored approaches to enhancing CTS and the mechanism of delayed fracture deterioration in resistance spot welding.

As already mentioned, the CTS is lowered as steel sheets are increased in strength. When the CTS is low, the fracture mode shifts from plug fracture in which the resistance spot weld is ductile fractured at the surrounding base material or at the HAZ, to interfacial fracture or partial plug fracture in which the weld is brittle fractured within the nugget. It is difficult to ensure CTS of high-strength steel sheets.

The causes of interfacial fracture include (a) embrittlement due to segregation that occurs between cells or dendrites in nugget edges during solidification, (b) embrittlement of nugget edges due to the formation of hard microstructures by rapid cooling after the nugget formation, and (c) stress concentration at nugget edges due to hardening. In order to avoid these causes, it is important to make sure that fracture occurs in the plug fracture mode. Furthermore, avoiding this brittle fracture requires that the microstructures in nugget edges have sufficient toughness, and that crack growing paths are changed in order to reduce the stress concentration at the nugget edges.

The vicinity of nugget edges is effectively tempered by reheating the nugget edges through post-energization during the welding process and by performing heat treatment after the welding. In this manner, cracking is prevented from propagating into the nugget and is caused to proceed toward the steel sheet surface. This allows fracture to occur in the plug fracture mode.

Furthermore, possible causes of delayed fracture are the hardness of a nugget edge that serves as an origin of fracture, and the influence of segregation and inclusions present in the nugget edge. In order to eliminate these causes, it is effective to prevent hardening of the nugget edge and to reduce the residual stress in the nugget edge. The finding of the present invention enables tempering of the vicinity of nugget edges and thereby makes it possible to reduce the residual stress near the nugget edges. This reduces the probability of delayed fracture.

Specifically, the present invention performs tempering of the vicinity of nugget edges by applying a welding current in an appropriately controlled manner and further effects tempering of the vicinity of nugget edges by subsequent heat treatment, thus enhancing the toughness of the nugget edges and reducing the residual stress in the vicinity of the nugget edges. In this manner, the CTS and further the delayed fracture resistance of the resultant welded joint are enhanced.

The present invention is based on the findings described above and the gist thereof is as follows.

[1] A method for producing a resistance spot welded joint in which two or more steel sheets including at least one high-strength steel sheet are resistance spot welded, wherein

the method includes a preparatory step of overlapping the two or more steel sheets to form a sheet assembly, a welding step of resistance spot welding the sheet assembly to form a resistance spot weld, and a heat treatment step of heat-treating the resistance spot weld formed in the welding step;
the high-strength steel sheet has a chemical composition including, in mass%:

C: 0.10 to 0.40%,
Si: 0.1 to 2.0%,
Mn: 1.5 to 5.5%,
P: 0.10% or less,
S: 0.005% or less,
N: 0.001 to 0.010%, and
O: 0.03% or less,
the balance being Fe and incidental impurities;

the welding step includes:

a main heating step of forming the resistance spot weld by applying a current $I_1$ (kA) to the sheet assembly, and

a post-heating step including:

a cooling process of cooling the resistance spot weld from the main heating step for a cooling time $t_{c1}$ (ms) shown in expression (1),

a heating process of subsequently applying a current $I_2$ (kA) shown in expression (2) to the resistance spot weld for a current passing time $t_2$ (ms) shown in expression (3), and a holding process of subsequently applying a current $I_3$ (kA) shown in expression (4) to the resistance spot weld for a current passing time $t_3$ (ms) shown in expression (5); and

the heat treatment step includes heat-treating the resistance spot weld from the post-heating step at a temperature T (°C) satisfying expression (6) for a time $t_4$ (min) satisfying expression (7),

$$20 \leq t_{c1} \leq 800 \cdots \text{Expression (1)}$$

$$I_1 \leq I_2 \leq 2.0 \times I_1 \cdots \text{Expression (2)}$$

$$10 \leq t_2 \leq 200 \cdots \text{Expression (3)}$$

$$0.10 \times I_2 < I_3 \leq 0.95 \times I_2 \cdots \text{Expression (4)}$$

$$0 < t_3 < 600 \cdots \text{Expression (5)}$$

$$70 \leq T \leq 300 \cdots \text{Expression (6)}$$

$$5 \leq t_4 \leq 30 \cdots \text{Expression (7)}.$$

[2] The method for producing a resistance spot welded joint according to [1], wherein the chemical composition of the high-strength steel sheet further includes, in mass%, one, or two or more selected from:

Cu: 0.8% or less,
Ni: 1.0% or less,
Mo: 1.0% or less,
Cr: 1.0% or less,
Nb: 0.080% or less,
V: 0.50% or less,
Ti: 0.20% or less,
B: 0.005% or less,
Al: 2.0% or less, and
Ca: 0.005% or less.

[3] The method for producing a resistance spot welded joint according to [1] or [2], wherein the high-strength steel sheet has a zinc coating layer on a steel sheet surface. Advantageous Effects of Invention

In a resistance spot weld of a resistance spot welded joint in which steel sheets including a high-strength steel sheet are welded, the present invention can enhance the toughness of nugget edges and can reduce the residual stress in the vicinity of the nugget edges. The present invention can therefore enhance the CTS and the delayed fracture resistance of the resistance spot welded joint, thus attaining significant effects in industry.

Brief Description of Drawings

[Fig. 1] Fig. 1 is a sectional view illustrating exemplary resistance spot welding in a production method of the present invention.

[Fig. 2] Fig. 2 is a diagram illustrating an exemplary energization pattern in a welding step in a production method of the present invention.

[Fig. 3] Fig. 3 is a through-thickness sectional view schematically illustrating a resistance spot weld. Description of Embodiments

A method for producing a resistance spot welded joint of the present invention will be described hereinbelow with reference to the drawings. It should be noted that the present invention is not limited to the embodiments below.

An aspect of the present invention resides in a method for producing a resistance spot welded joint in which a total of two or more steel sheets including at least one high-strength steel sheet are overlapped to form a sheet assembly, the sheet assembly is then clamped between a pair of welding electrodes and is resistance spot welded according to an energization pattern described later while being pressed by the welding electrodes, thereby joining the steel sheets together, and the resistance spot weld thus formed is subjected to a heat treatment, thereby manufacturing a welded joint.

Specifically, the method for producing a resistance spot welded joint of the present invention includes production steps including a preparatory step of overlapping two or more steel sheets to form a sheet assembly, a welding step of resistance spot welding the sheet assembly to form a resistance spot weld, and a heat treatment step of heat-treating the resistance spot weld formed in the welding step.

<Preparatory step>

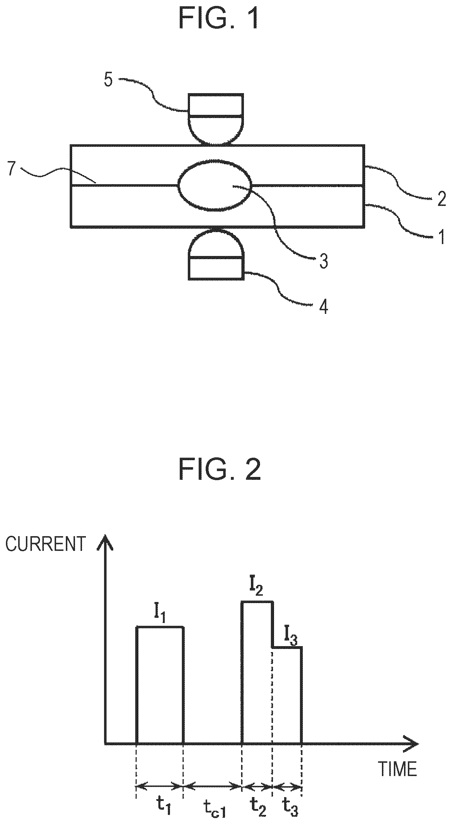

In this step, two or more steel sheets including at least one high-strength steel sheet are provided, and the two or more steel sheets are overlapped to form a sheet assembly. For example, as illustrated in Fig. 1 later, a steel sheet 1 arranged on the lower side (namely, a lower steel sheet) and a steel sheet 2 arranged on the upper side (namely, an upper steel sheet) are overlapped to form a sheet assembly. At least one of the steel sheets 1 or the steel sheet 2 is a high-strength steel sheet. The high-strength steel sheet in the present invention is a steel sheet having a chemical composition described later. The upper limit of the number of steel sheets that are overlapped is not particularly specified but is preferably four or less.

Next, a welding step is performed.

<Welding step>

The welding step includes a main heating step and a post-heating step described later. In the welding step, the sheet assembly prepared in the preparatory step is joined.

Fig. 1 is a through-thickness sectional view illustrating an exemplary welding step in which two steel sheets are resistance spot welded. In the following description, the production method of the present invention will be described with respect to joining of two overlapped steel sheets with reference to Fig. 1.

In the welding step, as illustrated in Fig. 1, the sheet assembly is clamped between a pair of welding electrodes 4 and 5 arranged on the lower and upper sides of the sheet assembly (namely, a lower electrode and an upper electrode), and is energized while being pressed under control to the predetermined welding conditions illustrated in Fig. 2. In this manner, a nugget 3 of desired size is formed by resistance heating between the steel sheets at a steel sheet lap surface 7, and the steel sheets are joined together.

When, for example, a high-strength cold-rolled steel sheet and a high-strength coated steel sheet are overlapped into a sheet assembly, the overlapping of the two steel sheets should be made sure that the coated side of the high-strength coated steel sheet will be opposed to the high-strength cold-rolled steel sheet.

Although not illustrated in the drawings, three or more steel sheets may be overlapped to form a sheet assembly. When such a sheet assembly is resistance spot welded, a nugget is formed so as to include a steel sheet lap surface of each pair of steel sheets.

Next, a heat treatment step is performed.

<Heat treatment step>

In the heat treatment step, the resistance spot weld formed in the welding step is heat-treated under the conditions described later. As already mentioned, this step aims to effectively temper the vicinity of nugget edges by reheating the nugget edges. This heat treatment step allows for producing a resistance spot welded joint (hereinafter, also written as the "welded joint") with enhancements in the properties described hereinabove (specifically, CTS and delayed fracture resistance).

The welding device for carrying out the resistance spot welding in the welding step of the present invention includes a pair of welding electrodes (namely, a lower electrode and an upper electrode) and has a configuration that allows the welding device to clamp an area (a region) to be welded between the lower electrode and the upper electrode and to apply a pressure and an electric current through the lower electrode and the upper electrode, and also enables appropriate control of the electrode force and the welding current separately during the welding. The configuration is not particularly limited.

For example, an air cylinder, a servomotor, or the like may be used as the pressure application mechanism. For example, the present invention may be applied to AC or DC control mechanism, and the type of the current control mechanical is not particularly limited and may be, for example, a stationary type or a robot gun. The type of the power source is not particularly limited and may be, for example, single-phase AC, AC inverter, or DC inverter. In the case of AC, the "current" means "effective current."

Furthermore, the types of the tips of the lower electrode and the upper electrode are not particularly limited. For example, the tip may be DR type (dome radius type), R type (radius type), or D type (dome type) described in JIS C 9304: 1999. The tip diameter of each electrode is, for example, 4 mm to 16 mm. The radius of curvature is, for example, 10 mm to 400 mm. Flat electrodes having a flat tip may also be used.

[High-strength steel sheets]

The reasons why the chemical composition of the base material of the high-strength steel sheets used in the present invention are limited will be described. In the following description, "%" in the chemical composition indicates "mass%" unless otherwise specified.

C: 0.10 to 0.40%

Carbon is an element that contributes to the strengthening of steel. If the C content is less than 0.10%, the steel is low in strength and it will not give steel sheets with a tensile strength of 980 MPa or more. If, on the other hand, the C content is more than 0.40%, the strength of steel sheets is increased but the amount of hard martensite in welded joints is excessively large and the number of microvoids increases. In addition, nuggets and HAZ around the nuggets are excessively increased in hardness and become brittle, making it difficult to enhance CTS. Thus, the C content is limited to 0.10 to 0.40%. The C content is preferably 0.12% or more. The C content is preferably 0.38% or less.

Si: 0.1 to 2.0%

0.1% or more silicon effectively strengthens steel. Silicon is a ferrite forming element and advantageously acts in the formation of ferrite in nugget edges. On the other hand, more than 2.0% silicon strengthens steel but may adversely affect toughness. Thus, the Si content is limited to 0.1 to 2.0%. The Si content is preferably 0.2% or more. The Si content is preferably 1.8% or less.

Mn: 1.5 to 5.5%

If the Mn content is less than 1.5%, it is difficult to manufacture high-strength steel sheets having the strength required in the present invention. If, on the other hand, the Mn content is more than 5.5%, it is difficult to enhance joint strength because resistance spot welds are markedly embrittled or embrittlement cracking is markedly facilitated. Thus, the Mn content is limited to 1.5 to 5.5%. The Mn content is preferably 2.0% or more. The Mn content is preferably 5.0% or less.

P: 0.10% or less

Phosphorus is an incidental impurity. If the P content is more than 0.10%, strong segregation occurs in nugget edges of resistance spot welds to make it difficult to enhance joint strength. Thus, the P content is limited to 0.10% or less. The P content is preferably 0.05% or less, and more preferably 0.02% or less. The lower limit of the P content is not particularly limited. However, excessive dephosphorization increases costs. Thus, the P content is preferably 0.005% or more.

S: 0.005% or less

Sulfur is an element that is segregated at grain boundaries to make steel brittle. Furthermore, sulfur sulfides and lowers the local deformability of steel sheets. Thus, the S content is limited to 0.005% or less. The S content is preferably 0.004% or less, and more preferably 0.003% or less. The lower limit of the S content is not particularly limited. However, excessive desulfurization increases costs. Thus, the S content is preferably 0.001% or more.

N: 0.001 to 0.010%

Nitrogen is an element that deteriorates the aging resistance of steel. Thus, the N content is limited to 0.001 to 0.010%. The N content is preferably 0.008% or less.

O: 0.03% or less

Oxygen (O) is an element that forms nonmetallic inclusions and thereby deteriorates the cleanliness and the toughness of steel. Thus, the O content is limited to 0.03% or less. The O content is preferably 0.02% or less. The O content is preferably 0.005% or more.

The high-strength steel sheets used in the present invention contain the above elements, and the balance is Fe and incidental impurities.

In the present invention, the chemical composition described above is the basic chemical composition of the high-strength steel sheets. In the present invention, where necessary, the chemical composition may further include one, or two or more elements selected from Cu, Ni, Mo, Cr, Nb, V, Ti, B, Al, and Ca. These elements are optional and the contents thereof may be 0%.

Cu: 0.8% or less, Ni: 1.0% or less, Mo: 1.0% or less

Copper, nickel, and molybdenum are elements that can contribute to enhancing the strength of steel. However, excessive addition thereof deteriorates toughness. Thus, when these elements are added, it is preferable to control the Cu content to 0.8% or less, the Ni content to 1.0% or less, and the Mo content to 1.0% or less. The Cu content is more preferably 0.6% or less. The Cu content is preferably 0.005% or more, and more preferably 0.006% or more. The Ni content is more preferably 0.8% or less. The Ni content is preferably 0.01% or more. The Mo content is more preferably 0.8% or less. The Mo content is preferably 0.005% or more, and more preferably 0.006% or more.

Cr: 1.0% or less

Chromium is an element that can enhance strength by improving hardenability. However, excessive addition of more than 1.0% chromium may result in poor toughness of HAZ. Thus, when chromium is added, it is preferable to control the Cr content to 1.0% or less. The Cr content is more preferably 0.8% or less. The Cr content is preferably 0.01% or more.

Nb: 0.080% or less

Niobium enhances CTS and delayed fracture resistance after resistance spot welding by forming fine carbonitride. In order to obtain this effect, 0.005% or more niobium is added. On the other hand, excessive addition of niobium significantly lowers elongation and also significantly deteriorates toughness. The Nb content is therefore to be 0.080% or less. Thus, when niobium is added, it is preferable to control the Nb content to 0.080% or less. The Nb content is more preferably 0.070% or less, and further preferably 0.060% or less. The Nb content is preferably 0.005% or more, and more preferably 0.006% or more.

V: 0.50% or less

Vanadium is an element that can strengthen steel by controlling the microstructures through precipitation hardening. However, excessive addition thereof leads to deterioration in HAZ toughness. Thus, when vanadium is added, it is preferable to control the V content to 0.50% or less. The V content is more preferably 0.3% or less. The V content is preferably 0.005% or more, and more preferably 0.02% or more.

Ti: 0.20% or less

Titanium is an element that can strengthen steel by improving hardenability. However, titanium, when added in a large amount, forms carbide and the consequent precipitation hardening significantly deteriorates toughness. Thus, when titanium is added, it is preferable to control the Ti content to 0.20% or less. The Ti content is more preferably 0.15% or less. The Ti content is preferably 0.003% or more, and more preferably 0.004% or more.

B: 0.005% or less

Boron is an element that can strengthen steel by improving hardenability. Thus, when boron is added, the B content is preferably 0.0005% or more, and more preferably 0.0007% or more. However, excessive addition of boron saturates the above effect. Thus, the B content is controlled to 0.005% or less. The B content is more preferably 0.0010% or less.

Al: 2.0% or less

Aluminum is an element that enables microstructure control by refining austenite grains, but excessive addition deteriorates toughness. Thus, when aluminum is added, it is preferable to control the Al content to 2.0% or less. The Al content is more preferably 1.5% or less. The Al content is preferably 0.02% or more, and more preferably 1.2% or more.

Ca: 0.005% or less

Calcium is an element that can contribute to enhancing the workability of steel. However, excessive addition thereof deteriorates toughness. Thus, when calcium is added, it is preferable to control the Ca content to 0.005% or less. The Ca content is more preferably 0.004% or less. The Ca content is preferably 0.001% or more.

The high-strength steel sheets with the above-described chemical composition may have a tensile strength of 980 MPa or more. The tensile strength of the high-strength steel sheets is preferably 1180 MPa or more. As already mentioned, in particular, base materials having a tensile strength of 980 MPa or more come with a risk that CTS may be lowered and delayed fracture resistance may be deteriorated. According to the present invention, even high-strength steel sheets having a tensile strength of 980 MPa or more can benefit from the formation of tough microstructures in the vicinity of nugget edges as a result of the reduction of segregation and tempering, and can be prevented from brittle fracture at the nugget edges. Thus, resistance spot welds can be prevented from a decrease in CTS and can be enhanced in delayed fracture resistance. Needless to mention, the above effects can be also obtained with high-strength steel sheets having a tensile strength of less than 980 MPa.

[Types of coatings on high-strength steel sheets]

The high-strength steel sheets of the present invention can attain the above-described effects even when the steel sheets have been galvanized and have a zinc coating layer on the steel sheet surface (namely, galvanized steel sheets). The zinc coating layer indicates a coating layer based on zinc. Examples of the zinc-based coating layers include hot-dip galvanized layers, electrogalvanized layers, Zn-Al coating layers, and Zn-Ni layers. The high-strength steel sheets of the present invention may be galvanized and then alloyed, that is, may be galvannealed steel sheets having a galvannealed layer on the base material surface.

In the present invention, the steel sheets that are overlapped may be two or more steel sheets of the same type or may be two or more steel sheets of different types. Overlapping may take place between a steel sheet having a zinc coating layer on the steel sheet surface (here, a galvanized steel sheet) and a steel sheet having no zinc coating layer on the steel sheet surface (here, a cold-rolled steel sheet). There is no problem if the thicknesses of the steel sheets are the same as or different from one another. In view of the fact that the target is general steel sheets for automobiles, the thickness of the steel sheets is preferably, for example, 0.4 mm to 2.2 mm.

Next, the energization pattern in the welding step in the production method of the present invention will be described.

In the welding step of the present invention, a sheet assembly that includes two or more overlapped steel sheets including at least one high-strength steel sheet is clamped between a pair of welding electrodes and is joined by being heated in the presence of a pressure. This heating includes a main heating step and a post-heating step. Each of these steps will be described in detail below.

<Main heating step>

The main heating step is a step in which a steel sheet lap surface 7 of steel sheets 1 and 2 constituting a sheet assembly is melted to form a nugget 3 with a desired size (see Fig. 1). In the main heating step, a nugget as a resistance spot weld is formed by energizing the sheet assembly at a current $I_1$ (kA).

The nugget diameter adopted for resistance spot welds of automobile steel sheets is generally $3.0\sqrt{t}$ (mm) to $6.0\sqrt{t}$ (mm) (where t (mm) is the sheet thickness). In the present invention, this numerical range is used as the "target nugget diameter". In the main heating step of the present invention, the energization conditions and the pressure conditions for forming the nugget 3 are not particularly limited as long as the nugget 3 that is obtained has the target nugget diameter.

In order to ensure that a nugget 3 will be formed stably with the target nugget diameter at a steel sheet lap surface between overlapped steel sheets including the high-strength steel sheet of the present invention, it is preferable that the main heating step be performed under energization conditions and pressure conditions controlled as follows.

The current $I_1$ (kA) in the main heating step is preferably 4.0 kA to 8.0 kA. If the current $I_1$ is too low, the target nugget diameter cannot be obtained stably. If, on the other hand, the current $I_1$ is too high, the nugget diameter may be excessively large, or the steel sheets may be melted to such a high degree that the molten resistance spot weld may be expelled as splash between the sheets, resulting in a small nugget diameter. For these reasons, the current $I_1$ is controlled to 4.0 kA to 8.0 kA. The current $I_1$ is more preferably 4.5 kA or more and is more preferably 7.5 kA or less. As long as the desired nugget diameter is obtained, the current $I_1$ may be set shorter or longer than the numerical range described above.

In actual practice, the heating for forming the nugget is sometimes controlled in multiple stages. In such a case, the heating that plays a principal role in nugget formation is regarded as the main heating step, and the current in that heating is taken as $I_1$.

The current passing time $t_1$ (ms) in the main heating step is preferably 120 ms to 400 ms. Similar to the current $I_1$, this time setting allows a nugget 3 to be stably formed with the target nugget diameter. If the current passing time $t_1$ is less than 120 ms, there is a concern that the nugget will not be formed sufficiently. If, on the other hand, the current passing time $t_1$ is more than 400 ms, there is a risk that the nugget that is formed may have a diameter larger than the target nugget diameter and workability may be lowered. As long as the desired nugget diameter is obtained, the current passing time $t_1$ may be set shorter or longer than the numerical range described above.

The pressure conditions in the main heating step are preferably such that the electrode force is set to 2.0 kN to 7.0 kN. If the electrode force is too high, the energizing diameter is increased to tend to make it difficult to ensure the nugget diameter. If, on the other hand, the electrode force is too low, the energizing diameter is small and splash occurs easily. For these reasons, the electrode force is controlled to 2.0 kN to 7.0 kN. The electrode force is more preferably 3.0 kN or more, and is more preferably 6.5 kN or less. The electrode force may be limited depending on the capacity of the equipment used. As long as the electrode force is sufficient to obtain the desired nugget diameter, the electrode force may be set lower or higher than the numerical range described above.

<Post-heating step>

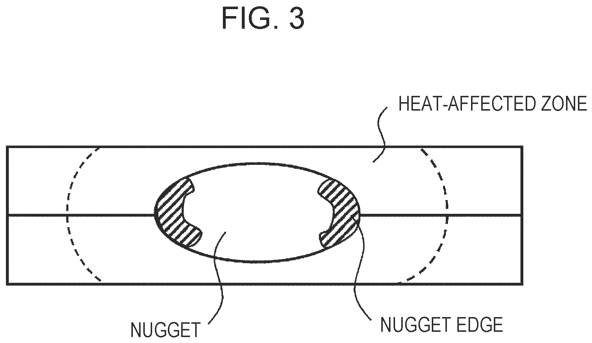

The post-heating step is a post-heating step for tempering the outside of nugget edges (see Fig. 3) of the resistance spot weld formed in the main heating step. In the post-heating step following the main heating step, the nugget edges are subjected to a cooling process, a heating process, and a holding process in this order. In order to ensure that the vicinity of the nugget edges will be effectively tempered by reheating of the nugget edges through post-energization during the welding process, it is important that the processes in the post-heating step be performed under welding conditions controlled as follows.

[Cooling process]

First, the nugget edges are cooled so that the nugget edges will be reheated in the subsequent heating process. In the cooling process, specifically, the resistance spot weld is cooled by being held in a non-energized state for a cooling time $t_{c1}$ (ms) shown in expression (1):

$$20 \leq t_{c1} \leq 800 \quad \cdots (1)$$

If the cooling time $t_{c1}$ (ms) in the cooling process is less than 20 ms, the resistance spot weld will be energized in the subsequent heating process and holding process before the temperature is lowered, and consequently the nugget edges are brought to an excessively high temperature and the nugget diameter is increased. As a result, the nugget is melted and the molten metal may be expelled as splash to cause a failure to ensure the desired nugget diameter. In order to ensure that the post-energization in the heating process will heat the nugget edges alone and the size of the nugget diameter will be maintained, the cooling time $t_{c1}$ (ms) is limited to 20 ms or more.

Even an extended cooling time allows martensitic transformation to take place and thus does not impair the quality of the resistance spot weld. An extension in welding time lowers the working efficiency. From the point of view of workability, the upper limit of the cooling time $t_{c1}$ is limited to 800 ms or less. The cooling time $t_{c1}$ (ms) is preferably 60 ms or more and is preferably 700 ms or less.

Regarding the pressure conditions during the cooling process in the post-heating step, the electrode force is preferably 2.5 kN to 7.0 kN. If the electrode force is too low, the contact area of the electrodes is small and the cooling does not proceed, failing to promote martensitic transformation. If, on the other hand, the electrode force is too high, the sheets may be deformed. For these reasons, the electrode force is controlled to 2.5 kN to 7.0 kN. The electrode force is more

**EP 4 592 415 A1**

preferably 3.0 kN or more. The electrode force is more preferably 6.5 kN or less. The electrode force may be limited depending on the capacity of the equipment used. As long as the electrode force is sufficient to obtain the desired nugget diameter, the electrode force may be set lower or higher than the numerical range described above.

[Heating process]

The cooling process is followed by a heating process. In the heating process, the resistance spot weld is heated to an appropriate range of temperatures by energization (post-energization) in order to reheat the nugget edges and thereby to reduce the segregation in the nugget edges and effectively temper the hard microstructures near the nugget edges. The "appropriate range of temperatures" indicates temperatures for reheating the nugget edges exclusively without giving rise to splash.

In the heating process, specifically, the resistance spot weld is energized at a current $I_2$ (kA) shown in expression (2) for a current passing time $t_2$ (ms) shown in expression (3):

$$I_1 \leq I_2 \leq 2.0 \times I_1 \quad \cdots (2)$$

$$10 \leq t_2 \leq 200 \quad \cdots (3)$$

Temper heating usually heats the center of the nugget and therefore the tempering is performed at a lower current than the current in a main heating step in order to ensure that the entire nugget will be tempered. The post-energization in the present invention, however, exclusively heats the nugget edges remote from the center of the nugget.

Referring to Fig. 3, the phrase "near (or the vicinity of) the nugget edges" in the present invention indicates the nugget edges and partial regions of the HAZ that are located outside the nugget edges. Furthermore, the "nugget edges" indicate portions of the nugget at both edges within the nugget outer periphery (the boundary between the nugget and the HAZ).

The current $I_2$ (kA) in the heating process is limited so that the relationship of expression (2) is satisfied. If the current $I_2$ in the heating process is lower than $I_1$ (kA), the heat input is insufficient and consequently the nugget edges cannot be heated. The current $I_2$ is preferably $(1.12 \times I_1)$ (kA) or more.

If, on the other hand, the current $I_2$ in the heating process is higher than $(2.0 \times I_1)$ (kA), the nugget edges are highly likely to exceed the melting point. As a result, it is probable that the molten metal inside the nugget will be expelled as splash and the desired nugget diameter will not be obtained. The current $I_2$ is preferably $(1.8 \times I_1)$ (kA) or less.

As already mentioned, the heating process increases the temperature rapidly in a short time. Thus, the current passing time $t_2$ (ms) is limited to the numerical range shown in expression (3) above. If the current passing time $t_2$ is more than 200 ms, the temperature is excessively increased and is likely to reach the austenite single phase region. As a result, the final microstructures that are obtained are brittle martensitic microstructures, and joint strength and delayed fracture resistance cannot be enhanced. The current passing time $t_2$ is preferably 60 ms or more and is preferably 180 ms or less.

Regarding the pressure conditions during the heating process in the post-heating step, the electrode force is preferably 2.5 kN to 7.0 kN. If the electrode force is too high, the contact area is so large that the nugget diameter may be increased. If, on the other hand, the electrode force is too low, a sufficient current density cannot be ensured and post-energization effects may not be obtained. For these reasons, the electrode force is controlled to 2.5 kN to 7.0 kN. The electrode force is more preferably 3.0 kN or more and is more preferably 6.5 kN or less.

[Holding process]

The heating process is followed by a holding process. In the holding process, the resistance spot weld is energized to maintain the temperature that has been rapidly increased in the heating process and to temper the nugget edges more effectively.

In the holding process, specifically, the resistance spot weld is energized at a current $I_3$ (kA) shown in expression (4) for a current passing time $t_3$ (ms) shown in expression (5):

$$0.10 \times I_2 < I_3 \leq 0.95 \times I_2 \quad \cdots \text{Expression (4)}$$

$$0 < t_3 < 600 \quad \cdots \text{Expression (5)}$$

The holding process is aimed at holding the resistance spot weld at a lower temperature than in the heating process. If the current $I_3$ in the holding process is too high, the nugget edges are brought to a high temperature and splash is

**10**

likely to occur as a result. Thus, the current $I_3$ (kA) is limited to $(0.95 \times I_2)$ (kA) or less. The current $I_3$ is preferably $(0.85 \times I_2)$ (kA) or less.

Segregation can be reduced and hard microstructures in the nugget edges can be tempered as long as the current $I_3$ in the holding process is lower than the current $I_2$ (kA) in the heating process. If, however, the current $I_3$ is less than $(0.10 \times I_2)$ (kA), the temperature only rises temporarily to the temperature given in the heating process and the tempering effects on the nugget edges may be lowered. Thus, the current $I_3$ (kA) is limited to more than $(0.10 \times I_2)$ (kA). The current $I_3$ is preferably $(0.20 \times I_2)$ (kA) or more.

If the current passing time (namely, the holding time) $t_3$ in the holding process is 0 ms, it is difficult to temper the nugget edges. Thus, the current passing time $t_3$ is limited to more than 0 ms. The current passing time $t_3$ is preferably 20 ms or more.

If, on the other hand, the current passing time $t_3$ in the holding process is 600 ms or more, the temperature is increased to make it difficult to effectively temper the nugget edges. Furthermore, the temperature is increased to bring the nugget edges again to the austenite region and the final microstructures may be brittle martensite. Thus, the current passing time $t_3$ is limited to less than 600 ms. The current passing time $t_3$ is preferably 400 ms or less.

Regarding the pressure conditions during the holding process in the post-heating step, the electrode force is controlled to 2.0 kN to 7.0 kN. If the electrode force is too high, the contact area is so large that the nugget diameter may be increased. If, on the other hand, the electrode force is too low, a sufficient current density cannot be ensured and post-energization effects may not be obtained. For these reasons, the electrode force is controlled to 2.0 kN to 7.0 kN. The electrode force is more preferably 3.0 kN or more and is more preferably 6.5 kN or less. The electrode force may be limited depending on the capacity of the equipment used. As long as the electrode force is sufficient to obtain the desired nugget diameter, the electrode force may be set lower or higher than the numerical range described above.

In the present invention, the nugget diameter in the resistance spot weld obtained after the post-heating step is preferably in the range of $3.0\sqrt{t}$ (mm) to $6.0\sqrt{t}$ (mm) in order to ensure sufficient joint strength (CTS) and delayed fracture resistance. When the sheet assembly includes sheets with different thicknesses, the sheet thickness "t" indicates the thickness of the thinnest steel sheet.

By virtue of the appropriate control of the post-heating step described above, the heat treatment process described below can produce effects effectively, and CTS and delayed fracture resistance are enhanced.

Next, the heat treatment step in the production method of the present invention will be described in detail.

<Heat treatment step>

The heat treatment step is performed on the joint resulting from the welding step. Heat treatment after the welding step can temper the resistance spot weld of the joint. The heat treatment thus enhances the toughness of the resistance spot weld and improve the joint strength.

In the heat treatment step, specifically, the resistance spot weld is heat-treated at a heat treatment temperature T (°C) satisfying expression (6) for a heat treatment time $t_4$ (min) satisfying expression (7):

$$70 \leq T \leq 300 \quad \cdots \text{Expression (6)}$$

$$5 \leq t_4 \leq 30 \quad \cdots \text{Expression (7)}$$

If the temperature T (°C) is too low, the treatment cannot temper the resistance spot weld and cannot produce tempering effects. If, on the other hand, the temperature T (°C) is too high, the weld is embrittled and consequently the resistance spot weld serves as a grain boundary fracture surface. Thus, the temperature T (°C) is limited to 70°C or above and 300°C or below. The temperature T is preferably 100°C or above and is preferably 280°C or below.

If the time $t_4$ (min) is too short, the treatment cannot temper the resistance spot weld and cannot produce tempering effects. If, on the other hand, the time $t_4$ is too long, the resistance spot weld may be embrittled. Furthermore, an excessively long time $t_4$ deteriorates workability. Thus, the time $t_4$ (min) is limited to 5 min or more and 30 min or less. In order to obtain higher tempering effects, the time $t_4$ is preferably 10 min or more and 25 min or less.

EXAMPLES

Hereinbelow, the functions and effects of the present invention will be described based on Examples. It should be noted that the present invention is not limited to the following Examples.

The test specimens that were used were steel sheets described in Tables 1 and 2 (here, steel sheets A to J) that had a tensile strength of 980 MPa to 1800 MPa. The size of the test specimens was 100 mm in long side and 30 mm in short side. Table 1 describes the chemical compositions of the steel sheets A to J.

The hyphen **"-"** in Table 1 indicates that the element was not added purposefully and means not only that the element was absent (namely, 0%) but also that the element was present as an incidental impurity. "GA steel sheet" in Table 2 indicates that the steel sheet was the galvannealed steel sheet described hereinabove.

In this Example, as illustrated in Fig. 1, a sheet assembly including two or more overlapped steel sheets (a lower steel sheet 1 and an upper steel sheet 2 in the example illustrated in Fig. 1) was resistance spot welded using a resistance welding machine of servomotor pressing type that was attached to a C-gun and had a DC power source.

First, the test specimens obtained were overlapped as described in Table 2 to form sheet assemblies. In Table 2, "Steel sheet overlapping positions" were counted "First" and "Second" from the bottom steel sheet upwards. Part of the sheet assemblies involved three steel sheets that were overlapped.

Next, the sheet assemblies were each resistance spot welded in the welding step under the welding conditions described in Table 3 to form a nugget 3 with a desired size between the sheets. Next, the resistance spot welds were heat-treated in the heat treatment step under the conditions described in Table 3. Resistance spot welded joints were thus produced. The hyphen **"-"** in Table 3 indicates that the process or the step was not performed.

Other welding conditions were as follows. The electrode force applied during energization was constant at 3.5 kN. The lower electrode 4 and the upper electrode 5 under and on the sheet assembly were DR-type chromium copper electrodes having a tip diameter of 6 mm and a tip radius of curvature of 40 mm. Welding was performed using the DC power source while controlling the electrode force through the lower electrode 4 and the upper electrode 5. A nugget was formed so that the nugget diameter in the resistance spot weld after the completion of welding would be $5.5\sqrt{t}$ (mm) or less where t (mm) is the sheet thickness.

The resistance spot welded joints obtained were subjected to a cross tension test (a CTS test) in the manner described below to evaluate the CTS. Furthermore, a delayed fracture test was performed in the manner described below to evaluate the delayed fracture resistance.

[Evaluation of CTS]

The CTS was evaluated based on a cross tension test. The resistance spot welded joints produced were cross tension tested by the method specified in JIS Z3137 to measure the CTS (the cross tension strength). Those welded joints that showed a measured value corresponding to JIS Grade A (namely, 3.4 kN) or greater were marked with "o", and those that showed a measured value below JIS Grade A level were marked with "×". In this Example, the CTS was evaluated as good when the rating was "o" and as poor when the rating was "×". The evaluation results are described in Table 3.

[Evaluation of delayed fracture resistance]

The delayed fracture test was performed as follows. The resistance spot welded joints produced were allowed to stand in air at room temperature (20°C) for 24 hours, and subsequently the welded joints were visually observed. Delayed fracture was judged to have occurred when a phenomenon in which the nugget had been separated was present. Those welded joints that had delayed fracture were marked with "×", and those that were free from delayed fracture were marked with "○". In this Example, the delayed fracture resistance was evaluated as good when the rating was "o" and as poor when the rating was "×". The evaluation results are described in Table 3.

[Evaluation of the joints]

In this Example, the joints were evaluated based on the evaluations of CTS and delayed fracture resistance described above. In Table 3, the joints were evaluated as "o (acceptable)" when the ratings of CTS and delayed fracture resistance were both "○". On the other hand, the joints were evaluated as "× (fail)" when either one of CTS and delayed fracture resistance was rated as "×" or when both CTS and delayed fracture resistance were rated as "×".

[Table 1]

| Steel sheet | Chemical composition (mass%) | | | | | | | | | | | | | | | | | Remarks |
|---|---|---|---|---|---|---|---|---|---|---|---|---|---|---|---|---|---|---|
| | C | Si | Mn | P | S | N | O | Cu | Ni | Mo | Cr | Nb | V | Ti | B | Al | Ca | |
| A | 0.20 | 1.3 | 3.0 | 0.01 | 0.001 | 0.003 | 0.005 | 0.010 | 0.15 | 0.010 | 0.20 | 0.008 | 0.006 | 0.005 | 0.0006 | 0.02 | 0.002 | Steel sheet A |
| B | 0.10 | 0.2 | 5.0 | 0.01 | 0.001 | 0.002 | 0.005 | 0.010 | 0.15 | 0.010 | 0.40 | 0.008 | 0.006 | 0.005 | 0.0006 | 0.02 | 0.002 | Steel sheet B |
| C | 0.20 | 1.1 | 2.0 | 0.01 | 0.002 | 0.002 | 0.010 | 0.010 | 0.15 | 0.010 | 0.20 | 0.008 | 0.050 | 0.010 | 0.0006 | 0.02 | 0.005 | Steel sheet C |
| D | 0.13 | 0.9 | 3.5 | 0.01 | 0.001 | 0.005 | 0.005 | 0.200 | 0.30 | 0.010 | 0.20 | 0.008 | 0.006 | 0.005 | 0.0006 | 0.03 | 0.002 | Steel sheet D |
| E | 0.30 | 1.5 | 2.5 | 0.01 | 0.001 | 0.003 | 0.005 | 0.010 | 0.15 | 0.010 | 0.20 | 0.008 | 0.006 | 0.030 | 0.0020 | 0.02 | 0.002 | Steel sheet E |
| F | 0.40 | 1.2 | 2.0 | 0.01 | 0.001 | 0.002 | 0.005 | 0.010 | 0.15 | 0.010 | 0.20 | 0.050 | 0.006 | 0.005 | 0.0006 | 0.02 | 0.002 | Steel sheet F |
| G | 0.50 | 0.5 | 1.5 | 0.03 | 0.001 | 0.002 | 0.005 | 0.050 | 0.15 | 0.010 | 0.20 | 0.008 | 0.006 | 0.005 | 0.0006 | 0.02 | 0.002 | Steel sheet G |
| H | 0.10 | 1.0 | 4.0 | 0.01 | 0.001 | 0.002 | 0.005 | - | - | - | - | - | - | - | - | - | - | Steel sheet H |
| I | 0.20 | 1.8 | 1.8 | 0.01 | 0.001 | 0.002 | 0.005 | - | - | - | - | - | - | - | - | - | - | Steel sheet I |
| J | 0.30 | 1.5 | 1.5 | 0.01 | 0.001 | 0.002 | 0.005 | - | - | - | - | - | - | - | - | - | - | Steel sheet J |

[Table 2]

| Sheet assembly | Steel sheet overlapping positions | Steel sheets | Steel sheet types | Tensile strength (MPa) | Steel sheet thickness (mm) |
|---|---|---|---|---|---|
| a | First | Cold-rolled steel sheet | Steel sheet A | 1180 | 1.2 |
| a | Second | Cold-rolled steel sheet | Steel sheet A | 1180 | 1.2 |
| b | First | Cold-rolled steel sheet | Steel sheet B | 1180 | 1.2 |
| b | Second | Cold-rolled steel sheet | Steel sheet B | 1180 | 1.2 |
| c | First | Cold-rolled steel sheet | Steel sheet C | 1180 | 1.2 |
| c | Second | Cold-rolled steel sheet | Steel sheet C | 1180 | 1.2 |
| d | First | Cold-rolled steel sheet | Steel sheet D | 980 | 1.2 |
| d | Second | Cold-rolled steel sheet | Steel sheet D | 980 | 1.2 |
| e | First | Cold-rolled steel sheet | Steel sheet E | 1470 | 1.2 |
| e | Second | Cold-rolled steel sheet | Steel sheet E | 1470 | 1.2 |
| f | First | Cold-rolled steel sheet | Steel sheet F | 1800 | 1.2 |
| f | Second | Cold-rolled steel sheet | Steel sheet F | 1800 | 1.2 |
| 9 | First | Cold-rolled steel sheet | Steel sheet G | 1470 | 1.2 |
| 9 | Second | Cold-rolled steel sheet | Steel sheet G | 1470 | 1.2 |
| h | First | Cold-rolled steel sheet | Steel sheet B | 1470 | 1.2 |
| h | Second | Cold-rolled steel sheet | Steel sheet G | 1470 | 1.2 |
| i | First | GA steel sheet | Steel sheet A | 1180 | 1.2 |
| i | Second | GA steel sheet | Steel sheet A | 1180 | 1.2 |
| j | First | GA steel sheet | Steel sheet B | 1180 | 1.2 |
| j | Second | GA steel sheet | Steel sheet B | 1180 | 1.2 |
| k | First | Cold-rolled steel sheet | Steel sheet H | 1180 | 1.2 |
| k | Second | Cold-rolled steel sheet | Steel sheet H | 1180 | 1.2 |
| k | Third | Cold-rolled steel sheet | Steel sheet H | 1180 | 1.2 |
| l | First | Cold-rolled steel sheet | Steel sheet H | 1180 | 1.2 |
| l | Second | Cold-rolled steel sheet | Steel sheet I | 1180 | 1.2 |
| m | First | Cold-rolled steel sheet | Steel sheet I | 1180 | 1.2 |
| m | Second | Cold-rolled steel sheet | Steel sheet J | 1180 | 1.2 |

[Table 3]

| Welding No. | Sheet assembly | Welding step | | | | | | | | Heat treatment step | | Evaluation results | | | | Remarks |
| | | Main heating step | | Post-heating step | | | | | | | | | | | | |
| | | | | Cooling process | Heating process | | Holding process | | | | | | | | |
| | | Current $I_1$ (kA) | Current passing time $t_1$ (ms) | Cooling time $t_{c1}$ (ms) | Current $I_2$ (kA) | Current passing time $t_2$ (ms) | Current $I_3$ (kA) | Current passing time $t_3$ (ms) | Temp. T (°C) | Time $t_4$ (min) | CTS (kN) | Assessment of CTS | Delayed fracture resistance | Joint evaluation | |
|---|---|---|---|---|---|---|---|---|---|---|---|---|---|---|---|
| 1 | a | 6.5 | 280 | - | - | - | - | - | - | - | 2.1 | × | × | × | Comp. Ex. |
| 2 | a | 6.5 | 280 | 30 | 7.0 | 50 | 1.5 | 150 | 200 | 5 | 7.8 | ○ | ○ | ○ | Inv. Ex. |
| 3 | a | 6.5 | 280 | 100 | 10.0 | 100 | 8.0 | 200 | 100 | 30 | 5.5 | ○ | ○ | ○ | Inv. Ex. |
| 4 | b | 6.5 | 280 | 800 | 7.0 | 50 | 6.5 | 400 | 70 | 5 | 6.9 | ○ | ○ | ○ | Inv. Ex. |
| 5 | b | 6.5 | 280 | 80 | 6.8 | 100 | 6.0 | 100 | 100 | 20 | 7.8 | ○ | ○ | ○ | Inv. Ex. |
| 6 | b | 6.5 | 280 | 80 | 6.8 | 80 | 6.0 | 100 | 200 | 40 | 3.0 | × | × | × | Comp. Ex. |
| 7 | c | 6.5 | 250 | 20 | 7.0 | 150 | 6.0 | 50 | 250 | 10 | 7.9 | ○ | ○ | ○ | Inv. Ex. |
| 8 | c | 6.5 | 250 | 100 | 6.8 | 120 | 5.0 | 100 | 200 | 20 | 8.3 | ○ | ○ | ○ | Inv. Ex. |
| 9 | c | 6.5 | 250 | 700 | 12.0 | 150 | 3.0 | 100 | 150 | 20 | 6.2 | ○ | ○ | ○ | Inv. Ex. |
| 10 | d | 6.5 | 250 | 200 | 8.0 | 140 | 5.0 | 400 | 250 | 30 | 8.5 | ○ | ○ | ○ | Inv. Ex. |
| 11 | d | 6.7 | 250 | 300 | 9.0 | 120 | 6.0 | 600 | 200 | 10 | 2.8 | × | ○ | × | Comp. Ex. |
| 12 | e | 6.7 | 280 | 80 | 10.0 | 250 | 3.0 | 100 | 200 | 10 | 1.7 | × | × | × | Comp. Ex. |
| 13 | e | 6.5 | 280 | 200 | 7.0 | 120 | 5.0 | 450 | 200 | 15 | 7.9 | ○ | ○ | ○ | Inv. Ex. |
| 14 | e | 6.5 | 280 | 400 | 8.0 | 100 | 5.5 | 200 | 200 | 15 | 6.7 | ○ | ○ | ○ | Inv. Ex. |
| 15 | e | 6.5 | 280 | 40 | 13.5 | 100 | 5.5 | 100 | 100 | 10 | 1.9 | × | × | × | Comp. Ex. |
| 16 | f | 6.5 | 280 | 700 | 8.0 | 50 | 4.0 | 100 | 200 | 10 | 5.1 | ○ | ○ | ○ | Inv. Ex. |

| Welding No. | Sheet assembly | Welding step | | | | | | | | Heat treatment step | | Evaluation results | | | | Remarks |
| | | Main heating step | | Post-heating step | | | | | | | | | | | | |
| | | | | Cooling process | Heating process | | Holding process | | | | | | | | | |
| | | Current $I_1$ (kA) | Current passing time $t_1$ (ms) | Cooling time $t_{c1}$ (ms) | Current $I_2$ (kA) | Current passing time $t_2$ (ms) | Current $I_3$ (kA) | Current passing time $t_3$ (ms) | | Temp. T (°C) | Time $t_4$ (min) | CTS (kN) | Assessment of CTS | Delayed fracture resistance | Joint evaluation | |
| 17 | f | 6.5 | 280 | 15 | 7.0 | 100 | 4.0 | 300 | | 200 | 10 | 1.3 | × | × | × | Comp. Ex. |
| 18 | f | 6.5 | 280 | 500 | 7.5 | 80 | 6.0 | 50 | | 70 | 20 | 5.3 | ○ | ○ | ○ | Inv. Ex. |
| 19 | f | 6.5 | 280 | 700 | 8.0 | 80 | 6.0 | 100 | | 100 | 3 | 2.2 | × | × | × | Comp. Ex. |
| 20 | 9 | 6.5 | 280 | 200 | 7.8 | 160 | 6.5 | 150 | | 200 | 15 | 1.3 | × | × | × | Comp. Ex. |
| 21 | 9 | 6.7 | 300 | 300 | 8.0 | 120 | 7.5 | 200 | | 200 | 10 | 1.0 | × | × | × | Comp. Ex. |
| 22 | h | 6.5 | 280 | 800 | 10.0 | 200 | 8.0 | 200 | | 200 | 15 | 5.8 | ○ | ○ | ○ | Inv. Ex. |
| 23 | h | 6.5 | 280 | 300 | 7.8 | 200 | 6.0 | 100 | | 50 | 20 | 1.5 | × | × | × | Comp. Ex. |
| 23 | h | 6.5 | 280 | 400 | 8.0 | 100 | 6.0 | 100 | | 200 | 20 | 6.5 | ○ | ○ | ○ | Inv. Ex. |
| 24 | i | 6.5 | 280 | 100 | 9.0 | 80 | 7.0 | 100 | | 200 | 20 | 6.8 | ○ | ○ | ○ | Inv. Ex. |
| 25 | i | 6.5 | 280 | 300 | 7.5 | 160 | 6.0 | 150 | | 200 | 20 | 7.2 | ○ | ○ | ○ | Inv. Ex. |
| 26 | j | 6.5 | 280 | 160 | 8.0 | 150 | 6.0 | 200 | | 200 | 15 | 7.1 | ○ | ○ | ○ | Inv. Ex. |
| 27 | j | 6.5 | 280 | 60 | 6.3 | 150 | 5.5 | 100 | | 200 | 15 | 2.8 | × | × | × | Comp. Ex. |
| 28 | c | 4.0 | 400 | 160 | 8.0 | 150 | 6.0 | 200 | | 200 | 20 | 6.1 | ○ | ○ | ○ | Inv. Ex. |
| 29 | k | 8.0 | 120 | 700 | 9.0 | 50 | 5.0 | 100 | | 200 | 20 | 7.8 | ○ | ○ | ○ | Inv. Ex. |
| 30 | l | 7.0 | 280 | 800 | 7.0 | 100 | 6.0 | 400 | | 70 | 5 | 6.9 | ○ | ○ | ○ | Inv. Ex. |

(continued)

| Welding No. | Sheet assembly | Welding step | | | | | | | | Heat treatment step | | Evaluation results | | | | Remarks |
| | | Main heating step | | Post-heating step | | | | | | | | | | | |
| | | | | Cooling process | Heating process | | Holding process | | Temp. T (°C) | Time $t_4$ (min) | CTS (kN) | Assessment of CTS | Delayed fracture resistance | Joint evaluation | |
| | | Current $I_1$ (kA) | Current passing time $t_1$ (ms) | Cooling time $t_{c1}$ (ms) | Current $I_2$ (kA) | Current passing time $t_2$ (ms) | Current $I_3$ (kA) | Current passing time $t_3$ (ms) | | | | | | | |
| 31 | m | 6.5 | 280 | 800 | 7.0 | 50 | 6.5 | 400 | 70 | 5 | 7.2 | ○ | ○ | ○ | Inv. Ex. |
| 32 | m | 6.5 | 280 | 800 | 8.0 | 50 | 6.5 | 300 | - | - | 2.8 | × | × | × | Comp. Ex. |
| 33 | a | 5.5 | 280 | 300 | 9.5 | 180 | 9.7 | 500 | 100 | 10 | 1.7 | × | × | × | Comp. Ex. |
| 34 | f | 6.0 | 250 | 200 | 10.2 | 100 | 1.0 | 200 | 100 | 20 | 1.0 | × | × | × | Comp. Ex. |
| 35 | d | 8.0 | 300 | 700 | 10.0 | 50 | 6.0 | 1 | 200 | 20 | 6.8 | ○ | ○ | ○ | Inv. Ex. |
| 36 | c | 7.5 | 300 | 700 | 9.0 | 100 | 4.0 | 590 | 150 | 20 | 7.2 | ○ | ○ | ○ | Inv. Ex. |
| 37 | l | 8.0 | 300 | 700 | 10.0 | 80 | 7.0 | 100 | 300 | 10 | 6.8 | ○ | ○ | ○ | Inv. Ex. |
| 38 | e | 5.5 | 280 | 100 | 8.0 | 180 | 7.0 | 400 | 310 | 30 | 1.9 | × | × | × | Comp. Ex. |
| 39 | d | 5.0 | 280 | 400 | 4.8 | 80 | 4.3 | 100 | 80 | 15 | 4.4 | ○ | × | × | Comp. Ex. |
| 40 | e | 8.0 | 280 | 15 | 12.0 | 180 | 6.0 | 100 | 150 | 10 | 2.1 | × | ○ | × | Comp. Ex. |

*1.Joint evaluation: The rating "○" means that the joint satisfied CTS and delayed fracture resistance. The rating "×" means that the joint failed to satisfy CTS and/or delayed fracture resistance.

As is clear from Table 3, the resistance spot welded joints of Inventive Examples produced by resistance spot welding of two or more steel sheets including at least one high-strength steel sheet were of good quality and had excellent CTS and excellent delayed fracture resistance at the same time. In contrast, Comparative Examples failed to produce satisfactory welded joints.

Reference Signs List

    1, 2 STEEL SHEETS
    3 NUGGET
    4, 5 WELDING ELECTRODES
    7 STEEL SHEET LAP SURFACE

**Claims**

1.   A method for producing a resistance spot welded joint in which two or more steel sheets including at least one high-strength steel sheet are resistance spot welded, wherein

the method comprises a preparatory step of overlapping the two or more steel sheets to form a sheet assembly, a welding step of resistance spot welding the sheet assembly to form a resistance spot weld, and a heat treatment step of heat-treating the resistance spot weld formed in the welding step;
the high-strength steel sheet has a chemical composition comprising, in mass%:

C: 0.10 to 0.40%,
Si: 0.1 to 2.0%,
Mn: 1.5 to 5.5%,
P: 0.10% or less,
S: 0.005% or less,
N: 0.001 to 0.010%, and
O: 0.03% or less,
the balance being Fe and incidental impurities;

the welding step comprises:

a main heating step of forming the resistance spot weld by applying a current $I_1$ (kA) to the sheet assembly, and
a post-heating step comprising:

a cooling process of cooling the resistance spot weld from the main heating step for a cooling time $t_{c1}$ (ms) shown in expression (1),
a heating process of subsequently applying a current $I_2$ (kA) shown in expression (2) to the resistance spot weld for a current passing time $t_2$ (ms) shown in expression (3), and
a holding process of subsequently applying a current $I_3$ (kA) shown in expression (4) to the resistance spot weld for a current passing time $t_3$ (ms) shown in expression (5); and

the heat treatment step comprises heat-treating the resistance spot weld from the post-heating step at a temperature T (°C) satisfying expression (6) for a time $t_4$ (min) satisfying expression (7),

$$20 \leq t_{c1} \leq 800 \quad \cdots \text{Expression (1)}$$

$$I_1 \leq I_2 \leq 2.0 \times I_1 \quad \cdots \text{Expression (2)}$$

$$10 \leq t_2 \leq 200 \quad \cdots \text{Expression (3)}$$

$$0.10 \times I_2 < I_3 \leq 0.95 \times I_2 \quad \cdots \text{Expression (4)}$$

$$0 < t_3 < 600 \quad \cdots \text{Expression (5)}$$

$$70 \leq T \leq 300 \quad \cdots \text{Expression (6)}$$

$$5 \leq t_4 \leq 30 \quad \cdots \text{Expression (7)}.$$

2. The method for producing a resistance spot welded joint according to claim 1, wherein the chemical composition of the high-strength steel sheet further comprises, in mass%, one, or two or more selected from:

   Cu: 0.8% or less,
   Ni: 1.0% or less,
   Mo: 1.0% or less,
   Cr: 1.0% or less,
   Nb: 0.080% or less,
   V: 0.50% or less,
   Ti: 0.20% or less,
   B: 0.005% or less,
   Al: 2.0% or less, and
   Ca: 0.005% or less.

3. The method for producing a resistance spot welded joint according to claim 1 or 2, wherein the high-strength steel sheet has a zinc coating layer on a steel sheet surface.

# FIG. 1

# FIG. 2

# FIG. 3

HEAT-AFFECTED ZONE

NUGGET

NUGGET EDGE

# INTERNATIONAL SEARCH REPORT

| International application No. |
| --- |
| **PCT/JP2023/040490** |

| A. | CLASSIFICATION OF SUBJECT MATTER |
| --- | --- |

*C22C 38/00*(2006.01)i; *C22C 38/04*(2006.01)i; *C22C 38/58*(2006.01)i; *B23K 11/11*(2006.01)i; *B23K 11/16*(2006.01)i; *B23K 11/24*(2006.01)i
FI: B23K11/11 540; B23K11/24 315; B23K11/16 311; C22C38/00 301U; C22C38/04; C22C38/58; C22C38/00 301T

According to International Patent Classification (IPC) or to both national classification and IPC

| B. | FIELDS SEARCHED |
| --- | --- |

Minimum documentation searched (classification system followed by classification symbols)

C22C38/00; C22C38/04; C22C38/58; B23K11/11; B23K11/16; B23K11/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022/249650 A1 (JFE STEEL CORP) 01 December 2022 (2022-12-01)<br>entire text, all drawings | 1-3 |
| A | WO 2021/177254 A1 (JFE STEEL CORP) 10 September 2021 (2021-09-10)<br>entire text, all drawings | 1-3 |
| A | JP 2020-40122 A (JFE STEEL CORP) 19 March 2020 (2020-03-19)<br>entire text, all drawings | 1-3 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 December 2023** | **09 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/040490**

| Patent document cited in search report | Publication date (day/month/year) | Patent family member(s) | Publication date (day/month/year) |
|---|---|---|---|
| WO 2022/249650 A1 | 01 December 2022 | (Family: none) | |
| WO 2021/177254 A1 | 10 September 2021 | EP 4116455 A1 entire text, all drawings KR 10-2022-0127335 A CN 115210027 A | |
| JP 2020-40122 A | 19 March 2020 | (Family: none) | |

Form PCT/ISA/210 (patent family annex) (January 2015)

**REFERENCES CITED IN THE DESCRIPTION**

**Patent documents cited in the description**

- JP 2010059451 A

- JP 6194765 B